# EUROPEAN PATENT SPECIFICATION

(11) **EP 2 091 244 B1**
(45) Date of publication and mention of the grant of the patent: **04.04.2018**
(21) Application number: 08002206.4
(22) Date of filing: 06.02.2008
(51) Int. Cl.: H04N 5/50

(54) **Method and system for receiving broadcasted signals, particularly used in a moveable device**
System und Verfahren zum Empfangen von Rundfunksignalen, insbesondere für eine bewegliche Vorrichtung
Procédé et système de réception de signaux de radiodiffusion, particulièrement utilisé pour un dispositif mobile

(43) Date of publication of application: 19.08.2009
(73) Proprietor: Alpine Electronics, Inc., Tokyo, 141 (JP)
(72) Inventor: Sofariu, Stefan, 70567 Stuttgart (DE); Wittig, Dirk, 70567 Stuttgart (DE)
(74) Representative: Schmitt-Nilson Schraud Waibel Wohlfrom Patentanwälte Partnerschaft mbB

(56) References cited:
- EP-A- 1 876 810
- WO-A-2007/034899
- US-A1- 2006 053 458

## Description

### Background of the Invention

### Field of the Invention

The present invention is directed to a method for receiving broadcasted signals which includes the steps of providing a receiver for receiving broadcasted signals and operating the receiver for executing a scanning process over a frequency band having a predetermined range and determining respective frequencies of the frequency band at which at least one service has been respectively identified during the scanning process, and storing the determined frequencies of the scanning process in a frequency list. The invention is further directed to a system for receiving broadcasted signals comprising a receiver for receiving broadcasted signals and a processing unit coupled with the receiver and which is adapted for performing the described steps.

### Description of the Related Art

Generally, a system for receiving and processing broadcasted signals may be implemented in a mobile communication and entertainment system configured for receiving multimedia information or data while a user is travelling. In one type of such system, a receiver is included for receiving broadcasted signals wherein the receiver comprises a tuner which is variably tunable and operable for receiving broadcasted signals at multiple frequencies of a particular frequency band. For example, at a first one of frequencies of the frequency band the receiver may be tuned for receiving a first service, such as a particular TV broadcast channel, whereas at another one of the frequencies of the frequency band the receiver may be tuned for receiving another service, such as a service of a radio broadcast channel. In this way, the user may have access to different content of different broadcast channels.

Particularly in the situation when the system is set into operation for the first time, the system does not know which services can be received at a particular frequency. In order for the system to determine the appropriate frequency for a corresponding service, it is known in the art that such system performs a so-called scanning process in which the receiver or tuner, respectively, continuously scans over a particular frequency band having a predetermined range for determining respective frequencies of the frequency band at which at least one service can be respectively identified during the scanning process. Such determined frequencies are typically stored in a kind of frequency list, so that after the scanning process the system knows the appropriate frequency for a particular service to be received.

Generally, a particular service may be broadcasted in different broadcasting areas, such as different geographical regions of a particular country, at different frequencies depending on the particular broadcasting area. If the system is implemented in a moveable device, such as a vehicle, when the user is travelling from one broadcasting area to another broadcasting area where a particular service is transmitted at a different frequency compared to the first broadcasting area, the receiver will have to perform another scanning process when the user is entering the second broadcasting area in order for the receiver to find the appropriate frequency for the particular service to be received. In such situation, the system has to scan in another continuous scanning process all possible frequencies of the respective frequency band in order to find all available services in the particular geographical area. The system has to repeat this procedure each time the user changes to another broadcasting area which is offering services at different frequencies as compared to the preceding broadcasting area. Typically, such a complete, continuous scanning process takes a rather long time having the disadvantage that in the time period during the scanning process there is no service available to be provided to the user. Therefore, every new scanning process over the frequency band decreases the usability of such system.

In JP 2005-318152 A there is disclosed a receiving method which comprises a step of verifying each channel to be receivable, determining analogous areas from a list of channels by area previously held in a receiver, utilizing a reception result of each channel and information obtained from a broadcast receiver and broadcast waves, etc., merging the determined list of channels by area and the reception result to generate receivable channel information, and showing them on a display as needed.

EP 1 876 810 A1 is related to a receiver which is operated such that a user scans the frequencies of terrestrial digital television broadcasting, for example, to register receivable channels (service) in a particular area in a channel list. The scan may be started and executed by pressing a manual button or by automatic control according to prescribed conditions. When a user moves, for example, from a broadcast service area A to another, the user cannot receive the channel in the broadcast service area A as it is. When such a state is detected, it is determined that a user has moved from the broadcast service area A to another and determination is made as to whether other channels with the same LCN can be received. The channel data registered on the LCN list is sequentially set in the tuner circuit and TS decoder circuit and determination is sequentially made whether the same channel as received until then can be received. In other words, this means that a broadcast service area where the same channel as received until then can be received is searched.

In WO 2007/034899 A digital broadcast receiving apparatus is designed, for example, as a vehicle-mounted apparatus and uses a GPS function to determine a current position. The physical channel information of broadcast stations existing in each of local areas includes a channel list created for that local area. A channel scan is performed, based on broadcast data obtained from a receiving means, for a physical channel registered with an acquired channel list for the local area.

US 2006/053458 A concerns a worldwide television tuning system in which during tuning, the user or application enters a particular channel number. The tuning system uses the channel number to look up a corresponding television frequency in a channel-to-frequency table. The tuning system then tunes to the television frequency. The tuning system stores a set of tuning frequencies for corresponding channels within a particular locale. If the tuning system is transported to another locale and then back to the original locale, the tuning frequencies may be retrieved from memory to restore operation within the original locale, rather than having to reconfigure the system.

### Summary of the Invention

It is therefore an object of the present invention to provide a method and system for receiving broadcasted signals which provide increased usability, particularly in the situation when the user is changing from a current broadcasting area to another broadcasting area in which a particular service is provided at respective different frequencies.

The invention provides a method for receiving broadcasted signals according to the features of claim 1. Moreover, the invention provides a system for receiving broadcasted signals according to the features of claim 12. Embodiments and advantageous features thereof are included in the dependent claims.

Particularly, the invention provides a method for receiving broadcasted signals, comprising the steps of providing a receiver for receiving broadcasted signals, operating the receiver for executing a first scanning process over a frequency band having a predetermined range and determining respective frequencies of the frequency band at which at least one service has been respectively identified during the first scanning process, and storing the determined frequencies of the first scanning process in a first frequency list. The method further includes the step of creating a main frequency list which stores frequencies corresponding to frequencies of the first frequency list. After having created the main frequency list, the method includes the step of evaluating at least one signal received by the receiver for determining whether the received signal contains at least a portion of utilizable information, and if it is determined that the received signal does not contain at least a portion of utilizable information, or upon a corresponding user's instruction, operating the receiver for executing a discrete scanning process over the main frequency list, thereby considering at least one of the frequencies stored in the main frequency list.

The invention provides increased usability, particularly in the situation when the user moves from a first broadcasting area to a second broadcasting area in which services are broadcasted at different frequencies compared to the first broadcasting area, since repeatedly performed continuous scanning processes over the whole frequency band of the particular broadcasting area, which are rather time consuming, can be avoided. Specifically, when the user is moving, the receiver will not scan every one of the frequencies of the frequency band in a continuous scanning process, but the receiver will scan only the frequencies stored in the main frequency list in a discrete scanning process, which may operate considerably faster since only a particular reduced number of frequencies is to be scanned. In the main frequency list, the frequencies and corresponding services are stored which are already known to the system. In the event that the user returns to a broadcasting area having broadcasted services which are already stored in an appropriate frequency list, the system will not need to perform a new continuous scanning process, but may rather quickly scan the already stored frequency list in order to find the appropriate frequency of the particular service to be searched. If any one or all of the provided services match with respective frequencies of the frequency list, the user is situated in an already scanned area and the system does not need to rescan.

If this is not the case, i.e. if the system is situated in a new broadcasting area providing services at respective frequencies which are not yet stored in any frequency list, the receiver is operated for executing another, second scanning process over a frequency band having a predetermined range and determines respective frequencies of the frequency band at which at least one service has been respectively identified during the second scanning process. The frequencies determined in the second scanning process are stored in a second frequency list, wherein the main frequency list is created in a manner that the main frequency list additionally stores frequencies corresponding to frequencies of the second frequency list. In other words, the main frequency list now contains frequencies corresponding to the first and second frequency lists.

According to the invention, the following step is made during the step of operating the receiver for executing the discrete scanning process over the main frequency list: If it is determined that the received signal at a selected one of the stored frequencies of the main frequency list contains at least a portion of utilizable information, i.e. a valid entry is found, and if the selected one of the stored frequencies is included in the first frequency list, the receiver is operated for continuing the discrete scanning process over the first frequency list instead of the main frequency list. On the other hand, if it is determined that the received signal at a selected one of the stored frequencies of the main frequency list contains at least a portion of utilizable information, i.e. a valid entry is found, and if the selected one of the stored frequencies is included in the second frequency list, the receiver is operated for continuing the discrete scanning process over the second frequency list instead of the main frequency list. In this way, the scanning effort can further be reduced since not the entire main frequency list has to be scanned, but only the one of the first and second frequency lists which includes the valid frequency found during the discrete scanning process in the main frequency list and which is shorter than the main frequency list.

Further embodiments and advantageous features of the invention are included in the dependent claims.

### Brief Description of the Drawings

The invention will now be explained in more detail by means of embodiments taken in conjunction with accompanying drawings, in which:
- Figure 1: shows a schematical block diagram illustrating an embodiment of a system for receiving broadcasted signals according to the invention;
- Figure 2: shows an illustration of multiple broadcasting areas having different services provided at different frequencies of a frequency band, and a corresponding frequency band being subject to a continuous scanning process;
- Figure 3: shows an illustration of a continuous scanning process over a frequency band and storing of the determined frequencies in a first frequency list and a main frequency list;
- Figure 4: shows an illustration of a discrete scanning process over frequencies of the main frequency list;
- Figure 5: shows an illustration of a situation in which the user moves from a first broadcasting area to a second broadcasting area and a correspondingly created main frequency list;
- Figure 6: shows another illustration of the situation according to Figure 5;
- Figure 7: shows an illustration of a situation in which the user moves from a second broadcasting area to a third broadcasting area and a correspondingly created main frequency list;
- Figure 8: shows another illustration of the situation according to Figure 7;
- Figure 9: shows an illustration of a particular situation and process flow according to an embodiment of the invention;
- Figure 10: shows an overall broadcasting area having a higher number of regional broadcasting areas;
- Figure 11: shows illustrations according to an embodiment of the inventions for reducing the scanning effort of a larger main frequency list storing frequencies of the broadcasting areas as shown in Fig. 10.

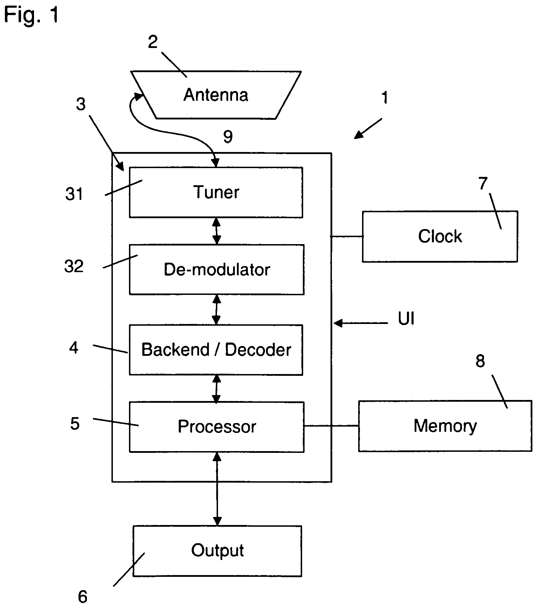

In Figure 1 there is shown a schematical block diagram illustrating an embodiment of a system for receiving broadcasted signals according to the invention. In the following, well-known functions or constructions of the system and of the individual components are not described in detail since they would obscure the invention in unnecessary detail. It will be understood by those of ordinary skill in the art how such components may be implemented in a particular system for performing the respective function, as described in the following description, wherein the person of ordinary skill in the art will understand that the present invention is not limited to the particular detailed descriptions.

According to Figure 1, the system 1 comprises a receiver 3 which may comprise multiple components or sections, such as a tuner 31 and an associated de-modulator 32 connected with each other as shown. The receiver 3 is connected to an associated antenna 2 for receiving a respective broadcasted signal 9 having a particular frequency or baseband. The signal 9 as illustrated in Figure 1, and any other signal received by antenna 2 and forwarded to receiver 3, shall be understood as being any kind of signal transmitting a respective content of information or data being broadcasted on a respective signal channel having a particular frequency. Such content of information or data being broadcasted on a respective signal channel is referred to in the following as "service". Particularly, the signal 9 received by the receiver 3 may be provided by one or multiple external information providers, such as a TV or radio broadcasting provider and/or an internet provider. The service transmitted by the respective signal may be, for example, a particular TV channel such as CNN or BBC, or any other kind of broadcasting service.

The system 1 according to Figure 1 further includes an output unit 6 for outputting at least one or multiple output signals. For example, the output unit 6 may be coupled with a display and/or a loudspeaker system for providing a respective received and processed information content, such as video or audio content, to the user in an appropriate way. The system 1 according to Figure 1 further includes a processing unit, which may include in the present embodiment multiple components such as a processor 5 and a backend/decoder device 4. The backend/decoder 4 and processor 5 forming the processing unit are coupled between the receiver 3 and the output unit 6 for processing the received signal 9 and for transmitting at least one processed signal to the output unit 6. The system 1 may further include a clock 7 for generating a time stamp, as explained in more detail below. A memory 8 for storing data related to the frequency lists is provided which may be coupled with the processor 5, as shown, or may be included in the processor 5. The system 1 also includes at least one interface means (not shown), such as a knob, key panel or touch screen, adapted for receiving a corresponding user's instruction UI for starting a scanning process if the user wants to start a scanning process at any time, for example when the received signal gets weak (that is, the provided image or service gets worse). It will be appreciated by those skilled in the art that the different components shown in Figure 1 may be implemented in a distributed or integrated manner, wherein also particular ones of the shown components may be combined into one unit or device, respectively. Further, the system 1 as shown in Figure 1 may be implemented as a digital system, an analogue system or as a combination of an analogue and digital system.

In the particular embodiment of Figure 1, the tuner 31 is tuned to a specified signal frequency, e.g. for receiving a specific broadcast channel or service transmitted on that particular frequency. The de-modulator 32 reads the quality of the analogue signal received from the tuner 31 and creates, in case of digital broadcasting signals, respective digital packets. The de-modulator 32 is coupled with the backend/decoder 4 which may perform the discrimination using the received signal from the de-modulator 32. Such processed signals are transmitted to the processor 5 in which the particular scanning processing and management according to the principles of the present invention is implemented. Particularly, the processor 5 is adapted for controlling the receiver 3, specifically the tuner 31 and the de-modulator 32 appropriately for executing the scanning processes as described in more detail below. The processor 5 is also adapted for creating the respective frequency lists and for storing these frequency lists in an appropriate memory held in the processor 5 or coupled appropriately with the processor 5.

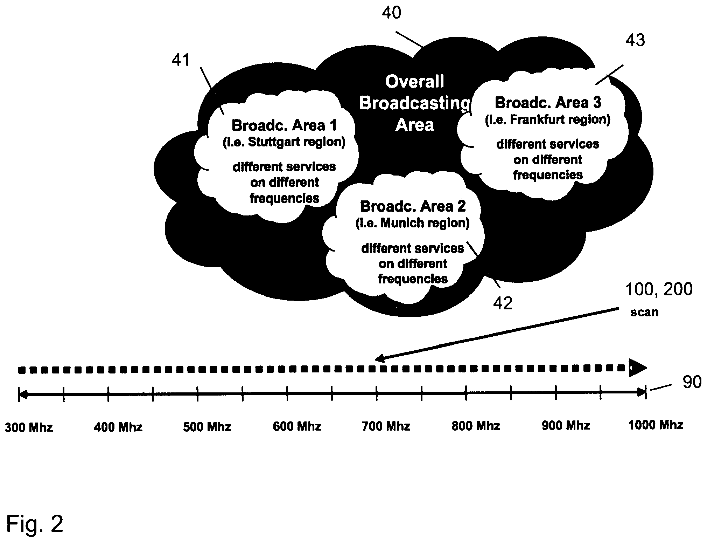

In the following, Figures 2 to 9 are intended to illustrate the basic principles according to the present invention by taking into account various embodiments of scanning management schemes implemented in processor 5, and are intended to provide further understanding of the invention with respect to the particular tuning and controlling of the receiver 3 and its included tuner 31 according to the principles of the invention.

According to Figure 2, there is shown an illustration of multiple broadcasting areas having different services provided at different frequencies. Particularly, it is assumed that an overall broadcasting area 40 shall represent, for example, a country, for example Germany. The broadcasting areas 41 to 43 shall represent particular regions of the overall broadcasting area 40. In the present example, broadcasting area 41 shall represent the Stuttgart region, broadcasting area 2 shall represent the Munich region, and broadcasting area 3 shall represent the Frankfurt region, just for illustration purposes. In the respective regional broadcasting areas 41 to 43, broadcasting services are provided which are located at different frequencies. In most cases, in different regional broadcasting areas the services are not provided at the same frequencies. Sometimes, it may occur that there are provided new services in the respective broadcasting area, or previously provided services are cancelled and are not available any more.

Basically, a system for receiving such broadcasted signals has to be operated in such that the receiver or tuner, respectively, executes a continuous scanning process over a frequency band, such as illustrated in the lower part of Figure 2. In this example, a continuous scanning process 100 is executed over the frequency band 90 having a predetermined range. In the present example, the frequency band shall have a range from 300 MHz to 1000 MHz, just for illustration purposes. Such scanning process 100 is necessary for the system to scan all possible frequencies of the frequency band 90 in order to find all available services of that frequency band. Such a complete continuous scanning process takes a rather long time having the disadvantage that in the time period of the scanning process there is no service available to be provided to the user. In this case, it would be beneficial to reduce the scanning time in order to have quicker access to services in case that the user changes the broadcasting area, e.g. from broadcasting area 41 to broadcasting area 42.

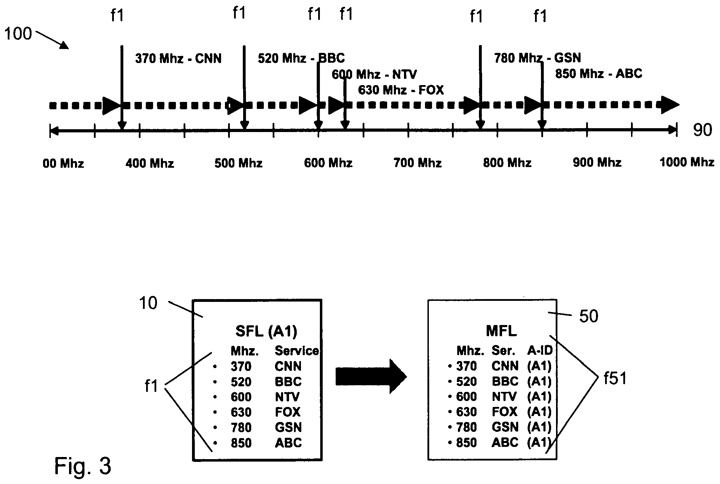

In Figure 3, there is shown an illustration of a continuous scanning process 100 over the frequency band 90 as previously shown, and the process of storing of the determined frequencies in a first frequency list 10 and a main frequency list 50. The situation shown in Figure 3 shall be a situation being significant of an initial operation of the system 1 according to Figure 1 when the system is set into operation for the first time. In this case, no services and associated frequencies are stored in the memory 8 by the processor 5 which may be used by the tuner for tuning an appropriate frequency for providing a service to the user. In this case, a first continuous scanning process 100 is required in order to determine respective frequencies f1 of the frequency band 90 at which at least one service has been respectively identified during the scanning process 100. For example, a frequency f1 of 370 MHz of the frequency band 90 has been determined at which a signal 9 has been received which transmits a service content such as that of TV channel CNN. At a further determined frequency f1 of 520 MHz the TV channel BBC is received, as illustrated in Figure 3. In the shown illustration, further frequencies f1 have been determined at which services as indicated have been identified.

As shown in the lower part of Figure 3, the determined frequencies f1 of the first scanning process 100 are stored in a first frequency list 10, designated as SFL (service frequency list). All found frequencies f1 of the frequency band 90 are stored in the frequency list 10, wherein in each entry of the frequency list belonging to a particular frequency f1 the respective services (names) which are associated with the respective frequency are added. In other words, the determined frequencies f1 are stored in the first frequency list 10 in that for each of the frequencies f1 determined in the scanning process 100 an associated service identification, such as CNN or BBC, etc., is stored.

Further, the first frequency list 10 is associated with a first regional identifier A1 which assigns the first frequency list to a specific area, such as area 41 shown in Figure 2. In other words, the frequency list 10 gets an identifier such as an ID A1 which is representing the broadcasting area 41 (area 1). The ID assigns the frequency list 10 to a specific area, in the present example to broadcasting area 41.

In a further step, a main frequency list 50 is created which stores frequencies f51 corresponding to frequencies f1 of the first frequency list 10. In the present example, the frequency list 10 is copied to the main frequency list or master frequency list (MFL) as shown. As the frequency list 10 is the initial service frequency list, the entries of the lists 10 and 50 are almost identical. However, when creating the main frequency list 50, respective ones of the frequencies f51 in the main frequency list 50 corresponding to frequencies f1 of the first frequency list 10 are associated with the regional identifier A1 which is associated with the frequency list 10. In this way, the area-IDs (A-IDs) in the main frequency list 50 are related to the broadcasting areas where the respective entries are originating from.

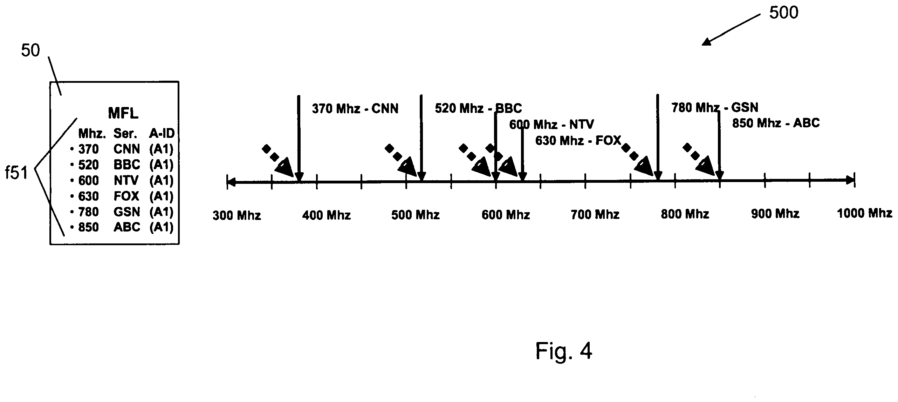

In Figure 4 there is shown an illustration of a discrete scanning process over frequencies of the main frequency list in a situation of normal operation of the receiver. In the normal operation of the receiver, at least one service shall be provided to the user by means of a display or a loudspeaker coupled to the system 1 as explained with reference to Figure 1. In some particular situations, it happens that the received signal is getting weak and/or lost. Particularly, this situation may occur when driving through skyscraper areas, in valleys or similar locations. After a certain period of time, if the signal is not getting back again, a new scan has to be started. For this purpose, the processor evaluates the corresponding received signal for determining whether the received signal contains at least a portion of utilizable information. If the received signal contains at least a portion of utilizable information, the respective service may be provided to the user in a more or less sufficient signal quality.

On the other hand, if it is determined that the received signal does not contain at least a portion of utilizable information, the processor 5 controls the receiver 3 for executing a discrete scanning process 500 as shown in Figure 4 over the main frequency list 50. This new scanning process 500 can be started automatically or may be activated by the user. In the discrete scanning process 500, the system considers at least one of only the frequencies stored in the main frequency list 50. In other words, the system is considering during the discrete scanning process the stored frequencies f51 of the main frequency list, wherein no scanning is performed through the other frequencies of the frequency band, such as performed in a continuous scanning process 100 as explained above. Thus, the system is only checking the exact frequencies f51 of the main frequency list 50 in a discrete scanning process. Such discrete scanning process takes less time than a continuous scanning process over the whole frequency band taking into account each of the frequencies of the frequency band.

Possible scanning results in a scanning process 500 as shown in Figure 4 may be as follows: If the first frequency of the frequency list 50 is found, all other frequencies associated with the same broadcasting area (same area ID) may be checked as well. In a first possibility, if the stored services of the main frequency list 50 are available, the content of the list 50 is valid again. In a second possibility, if the stored services of the main frequency list 50 are partly available, again a discrete scanning process 500 may be performed, for example for three times. In a third possibility, if the stored services of the main frequency list 50 are not available, a complete, continuous scanning process will start.

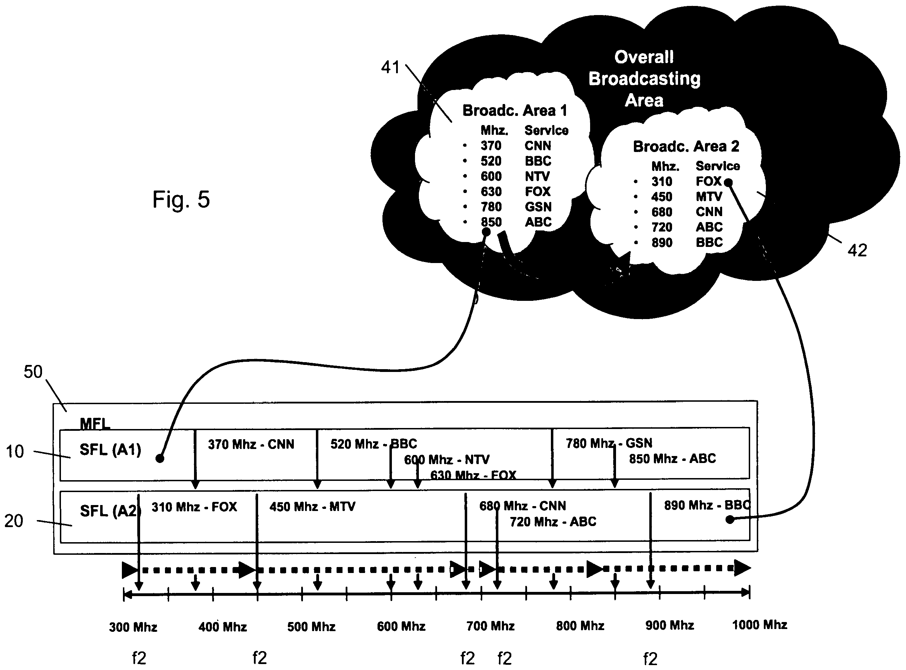

In Figure 5 an illustration is shown of a situation in which the user has moved from the first broadcasting area 41 to a second broadcasting area 42, as shown in upper part of Figure 5. With respect to the previously described initial situation, the situation according to Figure 5 is referred to in the following as "situation 2". If a vehicle, in which the system according to the invention is implemented, moves from the broadcasting area 41 to the broadcasting area 42 representing a new broadcasting area, when the vehicle moves within broadcasting area 41 the received signal is getting weak when the vehicle moves toward the broadcasting area 42 and, when entering the broadcasting area 42, gets finally lost. As the broadcasted services in broadcasting area 42 are not known to the system yet, the receiver 3 of the system 1 is again operated for executing a second continuous scanning process 200 (see Figure 2) over a frequency band 90 having a predetermined range, which may be the same or a different range as compared to the frequency band of the first continuous scanning process 100, and determines respective frequencies f2 of the frequency band at which at least one service has been respectively identified during the second scanning process 200. The continuous scanning process 200 is particularly started in the situation in which no services are found at the checked frequencies of the main frequency list 50.

As schematically shown in the lower part of Figure 5, after having made a complete continuous scan through all the frequencies of the frequency band, the processor 5 of the system updates the main frequency list 50 with the found services during the second scanning process 200. The determined frequencies f2 of the second scanning process 200 are stored in a second frequency list 20.

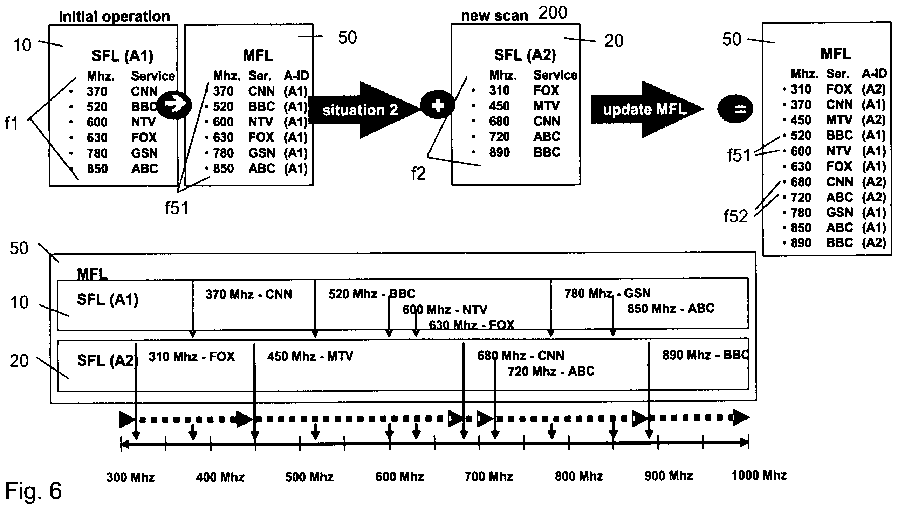

Thereafter, the main frequency list 50 is created in a manner that it stores frequencies f52 (Figure 6) corresponding to frequencies f2 of the second frequency list 20. Thus, the processor updates the main frequency list 50 with the services found during the second scanning process 200.

With reference now to Figure 6, there is shown another illustration of the situation according to the embodiment of Figure 5. In the upper part of Figure 6, there is again shown the situation according to an initial operation of the system according to which the main frequency list 50 stores frequencies f51 corresponding to the frequencies f1 of the first frequency list 10 which has been set up with the first continuous scanning process 100. With the second continuous scanning process 200 ("new scan"), the second frequency list 20 is created having the determined frequencies f2 of the second scanning process 200 as shown. Similar to the first frequency list 10, the second frequency list 20 is associated with a second regional identifier A2 which assigns the second frequency list to a specific area, in the present case to the broadcasting area 42. In other words, the second frequency list 20 is completed with an ID A2 to represent the broadcasting area 42 according to the user's current position. The main frequency list 50 is updated so that the main frequency list 50 additionally stores the frequencies f52 corresponding to the frequencies f2 of the second frequency list 20. Thus, the main frequency list 50 now contains the frequencies f51 associated with broadcasting area 41 (identifier A1) and frequencies f52 associated with broadcasting area 42 (identifier A2). To this end, the frequencies f52 in the main frequency list 50 that correspond to frequencies f2 of the second frequency list 20 are associated accordingly with the second regional identifier A2. Thus, within the main frequency list, the entries are completed with an area-ID which represents the corresponding broadcasting area the entry is originating from.

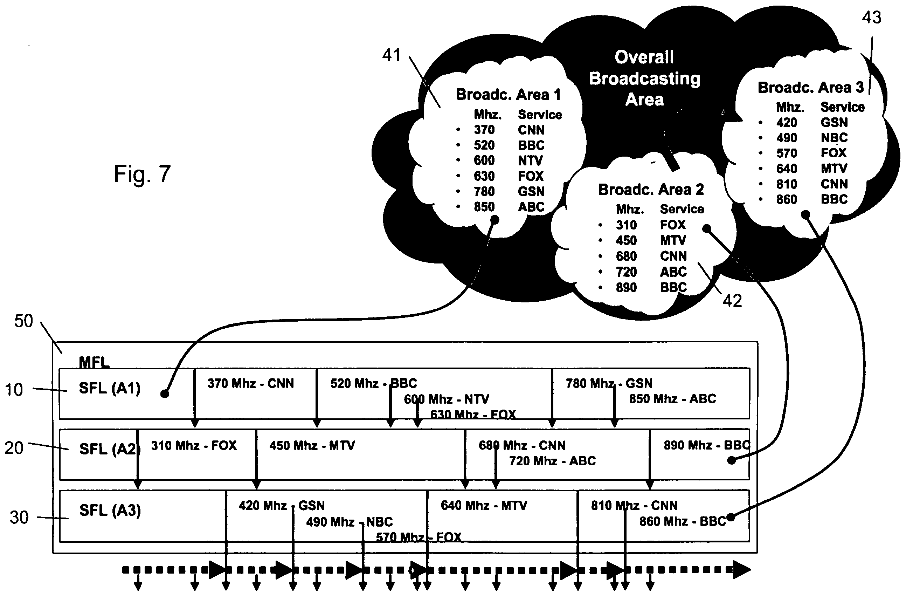

In Figure 7 there is shown an illustration of another situation in which the user has travelled from the second broadcasting area 42 to the third broadcasting area 43 and a corresponding set up of an updated main frequency list 50. This situation ("situation 3") is comparable to the proceeding situation ("situation 2"): If the system implemented in a vehicle moves to the further broadcasting area 43, the received signal is getting weak at first and then, upon entering the broadcasting area 43, gets lost. If no services are found at the checked frequencies f51, f52 of the current main frequency list 50, a complete continuous scanning process has to start again. Particularly, the system is first considering the stored frequencies f51, f52 of the main frequency list 50 for a discrete scanning process, wherein the exact frequencies of the main frequency list are checked for correspondence with services received in broadcasting area 43. If no services are found at the checked frequencies of the main frequency list, with the further complete continuous scanning process a third frequency list 30 will be created in a similar manner as frequency lists 10 and 20 described herein before. In a further step, the main frequency list is updated with the services found during such third continuous scanning process which also creates regional identifier A3 which assigns the third frequency list 30 to a specific area, in the present case to broadcasting area 43.

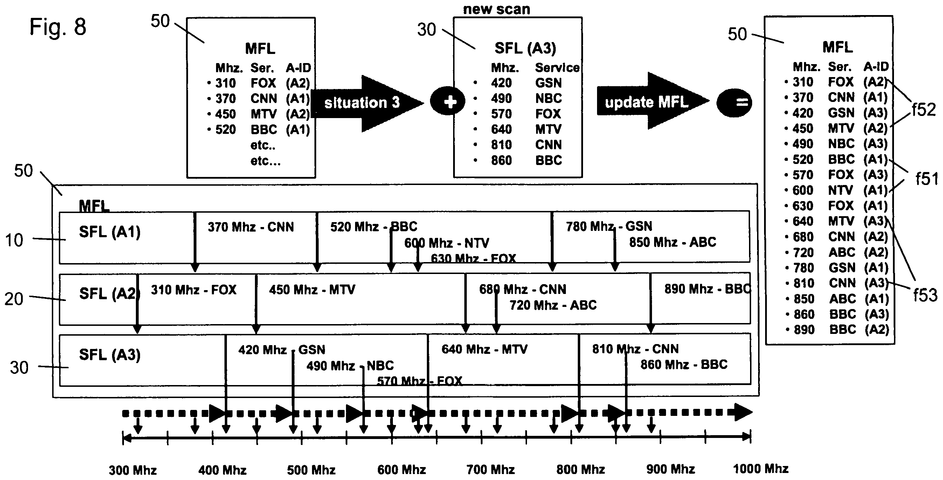

As shown in Figure 8, the third frequency list 30 is associated with the regional identifier A3. The main frequency list 50 stores frequencies f53 corresponding to frequencies of the third frequency list 30. The frequencies f53 in the main frequency list 50 which correspond to frequencies of the third frequency list 30 are associated with the regional identifier A3 in the corresponding entry of the main frequency list, as shown. Thus, the entries of the main frequency list 50 are completed with an area-ID A3 which represents the broadcasting area 43 the respective entry is originating from.

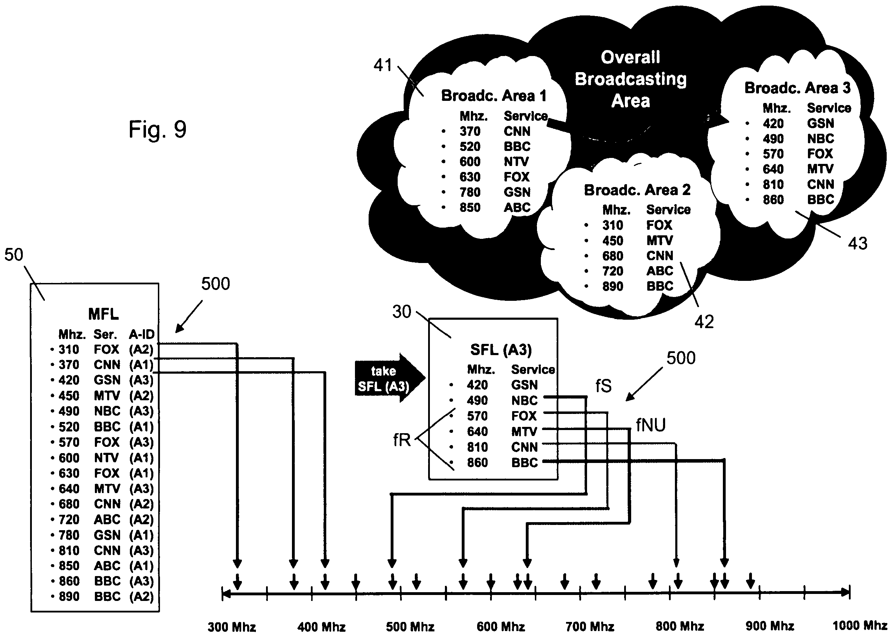

Referring now to Figure 9, there is shown an illustration of a particular situation and process flow according to an embodiment of the invention, taking into account a main frequency list 50 as previously explained with reference to Figure 8. The situation shown in Figure 9 is indicative of a situation in which a user moves between different broadcasting areas which are already known to the system according to the invention. When the vehicle the system is implemented in moves from broadcasting area 41 to broadcasting area 43, the received signal transmitting a particular service is getting weak and finally, after entering the broadcasting area 43, gets lost. Accordingly, the processor of the system determines during the evaluation process that the received signal does not contain at least a portion of utilizable information. This may include, for example, not receiving any transmitter identification or, generally, may include not receiving any kind of information which can be used for providing to the user. This may also include, for example, not receiving any signal having a predetermined signal strength (i.e. the receiver receives at best a signal having a signal strength lower than the predetermined signal strength as a threshold) or not receiving any signal having a predetermined signal quality (i.e. the receiver receives at best a signal having a signal quality lower than the predetermined signal quality as a threshold). If it is determined that the received signal does not contain utilizable information, the receiver executes a discrete scanning process 500 over the main frequency list 50, as schematically shown in the left part of Figure 9.

According to another embodiment of the invention, the receiver may execute a discrete scanning process 500 over the main frequency list 50, as schematically shown in the left part of Figure 9, upon a corresponding user's instruction Ul received by the system 1, for example, when the user decides that the received signal and respective received service content has not sufficient quality.

At the frequency of 420 MHz providing the service GSN, it is assumed that the received signal at this selected one of the stored frequencies of the main frequency list 50 contains at least a portion of utilizable information, thus a valid entry is found in the main frequency list 50. If it is determined that a valid entry is found, the regional identifier A1, A2 or A3 associated with the selected one of the stored frequencies of the main frequency list 50 (in the present case, the regional identifier A3 associated with the selected frequency of 420 MHz) is determined. In other words, the entries of the main frequency list are checked by the processor one by one, and if a valid entry is found (frequency plus service) the processor is checking the area-ID of the entry, i.e. in the present case A1, A2 or A3. After having found a valid entry in the main frequency list 50, the receiver will continue the discrete scanning process 500 over the corresponding first, second or third frequency list 10, 20 or 30. In the present case, the third frequency list 30 has a regional identifier A3 corresponding to the determined regional identifier A3 of the main frequency list 50, so that the discrete scanning process 500 is continued over the third frequency list 30. Accordingly, the processor takes the frequency list 30 instead of the main frequency list 50 and checks only the entries of the frequency list 30 for validation. This provides the advantage that the time period for such quick scan process can further be reduced as compared to the time period necessary for scanning the main frequency list 50, since the third frequency list 30 is shorter and has less entries than the main frequency list 50.

As further illustrated in Figure 9, the following particular embodiments may be implemented:

The discrete scanning process 500 over the third frequency list 30 is continued with the frequency of 420 MHz (service GSN), as described herein before, and any further stored frequency of the frequency list 30 until it is determined that a received signal at a further selected frequency fS contains at least a portion of utilizable information, i.e. a valid entry is found at frequency fS. In this case, the discrete scanning process 500 may be stopped at the selected frequency fS and the remaining frequencies fR of the frequency list 30 are taken by the receiver for tuning purposes without trying to match them to the available broadcasted services.

According to another embodiment, the discrete scanning process 500 may be continued for determining if all services stored in the frequency list match with respective available broadcasted services. In this case, if all services match, the system is situated in an already scanned area and the system does not have to perform a complete continuous rescan process.

According to another embodiment of the invention, in the event that it is determined that a received signal at a frequency fNU of the frequency list 30 does not contain at least a portion of utilizable information, i.e. a valid entry is not found at the frequency fNU, the entry corresponding to frequency fNU is cancelled from the frequency list 30, and the remainder of the frequencies stored in the frequency list 30 remain valid. This embodiment may be advantageous in a particular situation in which a receiving status of the system changes under certain circumstances, for example near high buildings, in a tunnel, etc., which may lead to the situation that received frequencies may be slightly different when the place of the system slightly changes.

According to a further embodiment, when the vehicle in which the system is implemented travels through a tunnel and the received signal is getting weak or lost, the scanning process may somehow be interrupted until the vehicle gets out of the tunnel and the scanning process will be continued with the most recent frequency list before entering the tunnel.

The same process as described above with reference to frequency list 30 may analogously be applied also with respect to frequency lists 10 and 20 depending on the identified regional identifier A1, A2 or A3 of the corresponding entry in the main frequency list 50.

According to another embodiment of the invention, the discrete scanning process 500 over one of the frequency lists 10, 20 or 30 is stopped if it is determined that a respective received signal at a predetermined number of the stored frequencies does not contain at least a portion of utilizable information. Particularly, if it is determined that one third of the overall number of stored frequencies of the respective frequency list does not contain utilizable information, the discrete scanning process is stopped and a new continuous scanning process over the whole frequency band (rescan process) is started. This new rescan process may be used for updating the respective first, second or third frequency list 10, 20 or 30.

According to another embodiment of the invention, the step of creating the first, the second, the third and the main frequency list 10, 20, 30, 50 includes the step of associating the respective frequency list with a respective time stamp which may be generated by the clock 7 (Fig. 1). Accordingly, during the discrete scanning process over one of the frequency lists, it is determined whether the respective time stamp has expired, and in the event that the time stamp has expired a continuous scanning process over a frequency band having a predetermined range is performed for updating the respective frequency list. This update process may be performed in a time period in which no service is presented to the user. This embodiment may be useful in situations in which the stored frequency lists get rather old so that the probability of added services or cancelled services in the respective broadcasting area is rather high which necessitates updating of the respective frequency list.

In the embodiment shown in Figure 9, the main frequency list 50 contains only frequencies which are uniquely associated with the respective service. However, there may be cases in which at a respective frequency two or more different services may be received in two or more different broadcasting areas. For example, there may be the case (not shown) that at the frequency of 600 MHz the service NTV is received in broadcasting area 41, and the service FOX is received in broadcasting area 43. In this case, during the discrete scanning process, two different regional identifiers A1 and A3 are determined, so that a further determination has to take place which of the frequency lists 10 or 30 is to be taken for continuing the discrete scanning process. In this case, the system will scan further frequencies in the main frequency list 50 in order to find a further valid entry (i.e. the received signal at the corresponding frequency contains utilizable information). The regional identifier of the further valid entry may be used for identifying the corresponding frequency list for continuing the discrete scanning process. In the above example, a further valid entry may be found at 640 MHz having the regional identifier A3, so that the discrete scanning process is continued with frequency list 30.

In a further embodiment, the main frequency list 50 may be sorted in a manner that entries related to services which are associated with only one respective stored frequency are listed first in the main frequency list. This has the advantage that the ambiguous situation just described may not occur as the system will find at the beginning of the discrete scanning process a frequency uniquely associated with a particular regional identifier, as these entries are listed first in the main frequency list.

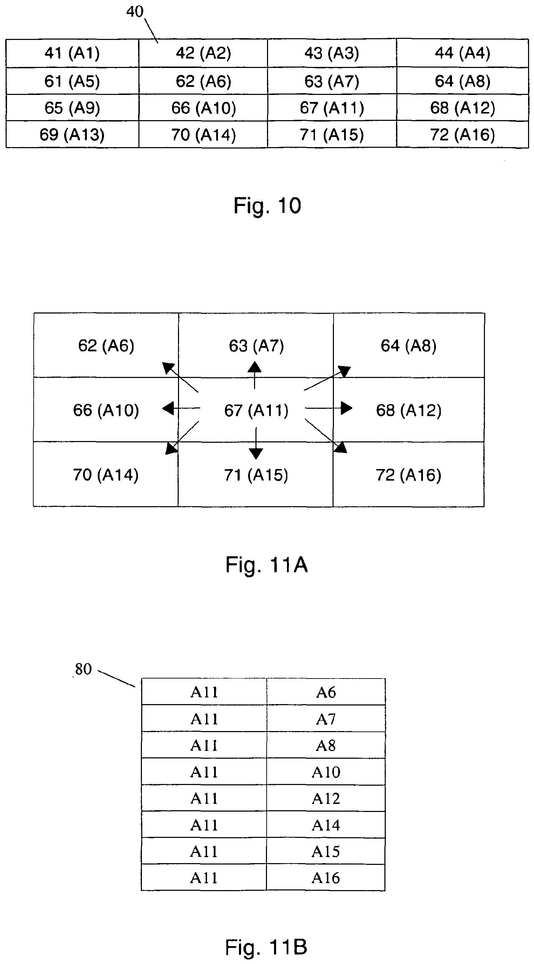

In Figures 10 and 11, there is shown a situation in which, according to an embodiment of the invention, the main frequency list 50 gets rather large as a consequence of storing a higher number of frequencies associated with a larger plurality of broadcasting areas, for example when the user has travelled through a large overall broadcasting area 40 having the regional broadcasting areas 41 to 72 as shown in Figure 10. The broadcasting areas 41 to 72 are each associated with a regional identifier A1 to A16 as shown. For instance, area 41 is associated with area ID A1, as already explained above, and area 67 is associated with area ID A11. In order to avoid that the receiver 3 must scan through all of the frequencies of areas 41 to 72 stored in the main frequency list 50, the following embodiment may be implemented, as illustrated in Figure 11:

The processor 5 further processes a step of recording each change from a current broadcasting area 41-72 to a subsequent broadcasting area 41-72 the user is travelling through. For example, it is assumed that the current broadcasting area the user is currently travelling through is area 67 having area ID A11. Each time the user changes from current broadcasting area 67 to a subsequent broadcasting area, as illustrated in Figure 11A by each arrow, this is recorded in a respective pair relationship, such as pair relationships 80 illustrated in Figure 11B. The pair relationships 80 may also be stored in memory 8 according to Figure 1. In the example of Figure 11A, the subsequent broadcasting areas 62, 63, 64, 66, 68, 70, 71 and 72 have a common border with current broadcasting area 67, which is however not obligatory. Generally, the respective regional identifier A1-A16 associated with each current broadcasting area and each subsequent broadcasting area is recorded in a respective pair relationship designating the current broadcasting area and the subsequent broadcasting area, the user is changing to or entering when exiting the current broadcasting area, such as illustrated in Figure 11B for the example of broadcasting area 67 (area-ID A11) being the current broadcasting area.

For reducing the scanning effort, the step of executing the discrete scanning process 500 over the main frequency list 50 includes considering only the frequencies in the main frequency list 50 having a regional identifier which is part of at least one pair relationship 80 containing the regional identifier of the most recent broadcasting area. In the example of Figure 11, only the frequencies associated with the regional identifiers A6, A7, A8, A10, A12, A14, A15, A16 are considered in the discrete scanning process since these regional identifiers are each part of at least one pair relationship 80 containing the regional identifier A11 of the most recent broadcasting area 67. Therefore, only the frequencies of broadcasting areas 62, 63, 64, 66, 68, 70, 71 and 72 are scanned in the discrete scanning process 500, thus reducing the scanning effort.

While the invention has been described with reference to exemplary embodiments, it will be understood by those skilled in the art that various changes may be made and equivalents may be substituted for elements or features thereof without departing from the scope of the claims. Therefore, it is intended that the invention not be limited to the particular embodiments disclosed, but that the invention will include all embodiments falling within the scope of the claims.

## Claims

1. A method for receiving broadcasted signals, comprising the steps of:
- providing a receiver (3) for receiving broadcasted signals,
- operating the receiver (3) for executing a first scanning process (100) over a frequency band (90) having a predetermined range and determining respective frequencies (f1) of the frequency band at which at least one service has been respectively identified during the first scanning process, and storing the determined frequencies (f1) of the first scanning process in a first frequency list (10),
- operating the receiver (3) for executing a second scanning process (200) over a frequency band (90) having a predetermined range and determining respective frequencies (f2) of the frequency band at which at least one service has been respectively identified during the second scanning process, and storing the determined frequencies (f2) of the second scanning process in a second frequency list (20),
- creating a main frequency list (50) which stores frequencies (f51, f52) corresponding to frequencies (f1, f2) of the first frequency list (10) and of the second frequency list (20),
- after having created the main frequency list (50), evaluating at least one signal (9) received by the receiver (3) for determining whether the received signal contains at least a portion of utilizable information which indicates that the respective service is provided to the user,
- if it is determined that the received signal (9) does not contain at least a portion of utilizable information, or upon a corresponding user's instruction (UI), operating the receiver (3) for executing a discrete scanning process (500) over the main frequency list (50), thereby considering at least one of the frequencies (f51, f52) stored in the main frequency list (50), **characterized in that**
- if it is determined that the received signal (9) at a selected one (f51) of the stored frequencies (f51, f52) of the main frequency list (50) contains at least a portion of utilizable information and if the selected one (f51) of the stored frequencies is included in the first frequency list (10), operating the receiver (3) for continuing the discrete scanning process (500) over the first frequency list (10) instead of the main frequency list (50), arid
- if it is determined that the received signal (9) at a selected one (f52) of the stored frequencies (f51, f52) of the main frequency list (50) contains at least a portion of utilizable information and if the selected one (f52) of the stored frequencies is included in the second frequency list (20), operating the receiver (3) for continuing the discrete scanning process (500) over the second frequency list (20) instead of the main frequency list (50).

2. The method according to claim 1, wherein
the determined frequencies (f1, f2) are stored in the first and second frequency lists (10, 20) in that for each of the frequencies determined in the first and second scanning processes (100, 200) an associated service identification (CNN, BBC, ...) is stored.

3. The method according to one of claims 1 or 2, wherein
- the first frequency list (10) is associated with a first regional identifier (A1) which assigns the first frequency list to a specific broadcasting area (41) in which the first scanning process (100) was executed,
- the second frequency list (20) is associated with a second regional identifier (A2) which assigns the second frequency list to a specific broadcasting area (42) in which the second scanning process (200) was executed.

4. The method according to claim 3, wherein
the step of creating the main frequency list (50) includes
- associating respective ones of the frequencies (f51) in the main frequency list (50) corresponding to frequencies (f1) of the first frequency list (10) with the first regional identifier (A1),
- associating respective ones of the frequencies (f52) in the main frequency list (50) corresponding to frequencies (f2) of the second frequency list (20) with the second regional identifier (A2).

5. The method according to claim 4, wherein
during the step of operating the receiver (3) for executing the discrete scanning process (500) over the main frequency list (50),
- if it is determined that the received signal (9) at a selected one of the stored frequencies (f51, f52) of the main frequency list contains at least a portion of utilizable information, determining the regional identifier (A1, A2) associated with the selected one of the stored frequencies (f51, f52) of the main frequency list (50), and
- operating the receiver (3) for continuing the discrete scanning process (500) over the one of the first and second frequency lists (10, 20) which has a regional identifier (A1, A2) corresponding to the determined regional identifier (A1, A2).

6. The method according to claim 4 or 5,
- further including the step of recording each change from a current broadcasting area (41-72) to subsequent broadcasting area (41-72), thereby recording the respective regional identifier (A1-A16) associated with each current broadcasting area and each subsequent broadcasting area in a respective pair relationship (80),
- wherein the step of operating the receiver (3) for executing a discrete scanning process (500) over the main frequency list (50) includes considering only the frequencies in the main frequency list (50) having a regional identifier (A6, A7, A8, A10, A12, A14, A15, A16) which is part of at least one pair relationship (80) containing the regional identifier (A11) of the most recent broadcasting area.

7. The method according to one of claims 1 to 6, wherein
- the discrete scanning process (500) over the first or second frequency list (10, 20) is continued until it is determined that a received signal (9) at a selected one (fS) of the stored frequencies (f1, f2) contains at least a portion of utilizable information,
- wherein the discrete scanning process (500) is stopped at the selected one (fS) of the stored frequencies and the remaining frequencies (fR) of the first or second frequency list (10, 20), respectively, are taken by the receiver for tuning purposes.

8. The method according to one of claims 1 to 7, wherein
in the discrete scanning process (500) over the first or second frequency list (10, 20), in the event that it is determined that a received signal (9) at one (fNU) of the stored frequencies (f1, f2) of the respective first or second frequency list (10, 20) does not contain at least a portion of utilizable information, the one (fNU) of the stored frequencies is cancelled from the respective first or second frequency list (10, 20).

9. The method according to one of claims 1 to 8, wherein
- the discrete scanning process (500) over the first or second frequency list (10, 20) is stopped if it is determined that a respective received signal (9) at a predetermined number of the stored frequencies (f1, f2) does not contain at least a portion of utilizable information, particularly wherein the predetermined number is approximately one third of the overall number of stored frequencies (f1, f2) of the respective frequency list (10, 20),
- wherein after stopping the discrete scanning process (500), a continuous scanning process (100) over a frequency band (90) having a predetermined range is performed for updating the respective first or second frequency list (10, 20).

10. The method according to one of claims 1 to 9, wherein
- the step of creating the first, the second and the main frequency list (10, 20, 50) includes the step of associating the respective frequency list with a respective time stamp,
- wherein during the discrete scanning process (500) over one of the frequency lists (10, 20, 50), it is determined whether the respective time stamp has expired, and in the event that the time stamp has expired a continuous scanning process (100) over a frequency band (90) having a predetermined range is performed for updating the respective frequency list.

11. The method according to one of claims 1 to 10, wherein
the main frequency list (50) is sorted in a manner that entries related to services which are associated with only one respective stored frequency (f51, f52) are listed first in the main frequency list.

12. A system (1) for receiving broadcasted signals, comprising - a receiver (3) for receiving broadcasted signals including a tuner (31) which is operable for receiving broadcasted signals (9) at multiple frequencies of a frequency band (90), - a processing unit (5, 8) coupled with the receiver (3) and which is adapted for performing the following steps: - controlling the receiver (3) for executing a first scanning process (100) over a frequency band (90) having a predetermined range and for determining respective frequencies (f1) of the frequency band at which at least one service has been respectively identified during the first scanning process, and for executing a second scanning process (200) over a frequency band (90) having a predetermined range and for determining respective frequencies (f2) of the frequency band at which at least one service has been respectively identified during the second scanning process, - storing the determined frequencies (f1) of the first scanning process (100) in a first frequency list (10) and the determined frequencies (f2) of the second scanning process in a second frequency list (20),
- creating a main frequency list (50) which stores frequencies (f51, f52) corresponding to frequencies (f1, f2) of the first and second frequency list (10),
- after having created the main frequency list (50), evaluating at least one signal (9) received by the receiver (3) for determining whether the received signal contains at least a portion of utilizable information which indicates that the respective service is provided to the user,
- if it is determined that the received signal (9) does not contain at least a portion of utilizable information, or upon a corresponding user's instruction (Ul), controlling the receiver (3) for executing a discrete scanning process (500) over the main frequency list (50), thereby considering at least one of the frequencies (f51, f52) stored in the main frequency list (50), **characterized in that**
- if it is determined that the received signal (9) at a selected one (f51) of the stored frequencies (f51, f52) of the main frequency list (50) contains at least a portion of utilizable information and if the selected one (f51) of the stored frequencies is included in the first frequency list (10), operating the receiver (3) for continuing the discrete scanning process (500) over the first frequency list (10) instead of the main frequency list (50), and
- if it is determined that the received signal (9) at a selected one (f52) of the stored frequencies (f51, f52) of the main frequency list (50) contains at least a portion of utilizable information and if the selected one (f52) of the stored frequencies is included in the second frequency list (20), operating the receiver (3) for continuing the discrete scanning process (500) over the second frequency list (20) instead of the main frequency list (50).

13. The system according to claim 12, wherein
the system (1) is implemented in a movable device, particularly in a vehicle.

## Patentansprüche

1. Verfahren zum Empfangen von Rundfunksignalen, das folgende Schritte aufweist:
- Bereitstellen eines Empfängers (3) zum Empfangen von gesendeten Signalen;
- Betreiben des Empfängers (3) zum Ausführen eines ersten Abtastvorgangs (100) über ein Frequenzband (90) mit einer vorbestimmten Spanne und zum Feststellen von jeweiligen Frequenzen (f1) des Frequenzbands, bei denen während des ersten Abtastvorgangs jeweils mindestens ein Dienst identifiziert worden ist, und Speichern der festgestellten Frequenzen (f1) des ersten Abtastvorgangs in einer ersten Frequenzliste (10),
- Betreiben des Empfängers (3) zum Ausführen eines zweiten Abtastvorgangs (200) über ein Frequenzband (90) mit einer vorbestimmten Spanne und zum Feststellen von jeweiligen Frequenzen (f2) des Frequenzbands, bei denen während des zweiten Abtastvorgangs jeweils mindestens ein Dienst identifiziert worden ist, und Speichern der festgestellten Frequenzen (f2) des zweiten Abtastvorgangs in einer zweiten Frequenzliste (20),
- Erstellen einer Hauptfrequenzliste (50), die Frequenzen (f51, f52) speichert, die Frequenzen (f1, f2) der ersten Frequenzliste (10) und der zweiten Frequenzliste (20) entsprechen,
- nach Erstellung der Hauptfrequenzliste (50) erfolgendes Auswerten von mindestens einem von dem Empfänger (3) empfangenen Signal (9), um festzustellen, ob das empfangene Signal mindestens einen Teil von nutzbarer Information enthält, die anzeigt, dass der jeweilige Dienst dem Nutzer bereitgestellt wird,
- bei Feststellung, dass das empfangene Signal (9) nicht mindestens einen Teil von nutzbarer Information enthält oder wenn eine entsprechende Nutzeranweisung (UI) vorliegt, Betreiben des Empfängers (3) zum Ausführen eines diskreten Abtastvorgangs (500) über die Hauptfrequenzliste (50), wobei dadurch mindestens eine der in der Hauptfrequenzliste (50) gespeicherten Frequenzen (f51, f52) berücksichtigt wird,
**gekennzeichnet durch**:
- bei Feststellung, dass das empfangene Signal (9) bei einer ausgewählten (f51) der gespeicherten Frequenzen (f51, f52) der Hauptfrequenzliste (50) mindestens einen Teil von nutzbarer Information enthält, und wenn die ausgewählte eine Frequenz (f51) der gespeicherten Frequenzen in der ersten Frequenzliste (10) enthalten ist, Betreiben des Empfängers (3) zum Fortsetzen des diskreten Abtastvorgangs (500) über die erste Frequenzliste (10) anstatt der Hauptfrequenzliste (50), und
- bei Feststellung, dass das empfangene Signal (9) bei einer ausgewählten (f52) der gespeicherten Frequenzen (f51, f52) der Hauptfrequenzliste (50) mindestens einen Teil von nutzbarer Information enthält und wenn die ausgewählte eine Frequenz (f52) der gespeicherten Frequenzen in der zweiten Frequenzliste (20) enthalten ist, Betreiben des Empfängers (3) zum Fortsetzen des diskreten Abtastvorgangs (500) über die zweite Frequenzliste (20) anstatt der Hauptfrequenzliste (50).

2. Verfahren nach Anspruch 1,
wobei die festgestellten Frequenzen (f1, f2) in der ersten und der zweiten Frequenzliste (10, 20) gespeichert werden, indem für jede der im ersten und zweiten Abtastvorgang (100, 200) festgestellten Frequenzen eine zugeordnete Dienstkennung (CNN, BBC, ...) gespeichert wird.

3. Verfahren nach einem der Ansprüche 1 oder 2,
wobei
- die erste Frequenzliste (10) einer ersten regionalen Kennung (A1) zugeordnet wird, die die erste Frequenzliste einem bestimmten Sendebereich (41) zuordnet, in dem der erste Abtastvorgang (100) ausgeführt wurde,
- die zweite Frequenzliste (20) einer zweiten regionalen Kennung (A2) zugeordnet wird, die die zweite Frequenzliste einem bestimmten Sendebereich (42) zuordnet, in dem der zweite Abtastvorgang (200) ausgeführt wurde.

4. Verfahren nach Anspruch 3,
wobei der Schritt des Erstellens der Hauptfrequenzliste (50) beinhaltet:
- Zuordnen von jeweiligen Frequenzen (f51) in der Hauptfrequenzliste (50), die Frequenzen (f1) der ersten Frequenzliste (10) entsprechen, zu der ersten regionalen Kennung (A1),
- Zuordnen von jeweiligen Frequenzen (f52) in der Hauptfrequenzliste (50), die Frequenzen (f2) der zweiten Frequenzliste (20) entsprechen, zu der zweiten regionalen Kennung (A2).

5. Verfahren nach Anspruch 4,
wobei während des Schrittes des Betreibens des Empfängers (3) zum Ausführen des diskreten Abtastvorgangs (500) über die Hauptfrequenzliste (50)
- bei Feststellung, dass das empfangene Signal (9) bei einer ausgewählten der gespeicherten Frequenzen (f51, f52) der Hauptfrequenzliste mindestens einen Teil von nutzbarer Information enthält, die regionale Kennung (A1, A2) festgestellt wird, die der ausgewählten Frequenz der gespeicherten Frequenz (f51, f52) der Hauptfrequenzliste (50) zugeordnet ist, und
- der Empfänger (3) zum Fortsetzen des diskreten Abtastvorgangs (500) über die eine von der ersten und der zweiten Frequenzliste (10, 20) betrieben wird, die eine regionale Kennung (A1, A2) aufweist, die der festgestellten regionalen Kennung (A1, A2) entspricht.

6. Verfahren nach Anspruch 4 oder 5,
- das ferner den Schritt beinhaltet, in dem jede Änderung von einem aktuellen Sendebereich (41-72) zu einem nachfolgenden Sendebereich (41-72) aufgezeichnet wird, um dadurch die jeweilige regionale Kennung (A1-A16) aufzuzeichnen, die jedem aktuellen Sendebereich und jedem nachfolgenden Sendebereich in einer jeweiligen Paarbeziehung (80) zugeordnet ist,
- wobei der Schritt des Betreibens des Empfängers (3) zum Ausführen eines diskreten Abtastvorgangs (500) über die Hauptfrequenzliste (50) eine Berücksichtigung nur der Frequenzen in der Hauptfrequenzliste (50) mit einer regionalen Kennung (A6, A7, A8, A10, A12, A14, A15, A16) beinhaltet, die Teil von mindestens einer Paarbeziehung (80) ist, die die regionale Kennung (A11) des jüngsten Sendebereichs enthält.

7. Verfahren nach einem der Ansprüche 1 bis 6,
wobei
- der diskrete Abtastvorgang (500) über die erste oder zweite Frequenzliste (10, 20) fortgesetzt wird, bis festgestellt wird, dass ein empfangenes Signal (9) bei einer ausgewählten (fS) der gespeicherten Frequenzen (f1, f2) mindestens einen Teil von nutzbarer Informationen enthält,
- wobei der diskrete Abtastvorgang (500) bei der ausgewählten (fS) der gespeicherten Frequenzen gestoppt wird und die verbleibenden Frequenzen (fR) der ersten oder zweiten Frequenzliste (10, 20) von dem Empfänger für Abstimmungszwecke genutzt werden.

8. Verfahren nach einem der Ansprüche 1 bis 7,
wobei
- in dem diskreten Abtastvorgang (500) über die erste oder zweite Frequenzliste (10, 20) für den Fall, dass festgestellt wird, dass ein empfangenes Signal (9) bei einer (fNU) der gespeicherten Frequenzen (f1, f2) der jeweiligen ersten oder zweiten Frequenzliste (10, 20) nicht mindestens einen Teil von nutzbarer Information enthält, die eine (fNU) der gespeicherten Frequenzen aus der jeweiligen ersten oder zweiten Frequenzliste (10, 20) gelöscht wird.

9. Verfahren nach einem der Ansprüche 1 bis 8,
wobei
- der diskrete Abtastvorgang (500) über die erste oder die zweite Frequenzliste (10, 20) gestoppt wird, wenn festgestellt wird, dass ein jeweiliges empfangenes Signal (9) bei einer vorbestimmten Anzahl der gespeicherten Frequenzen (f1, f2) nicht mindestens einen Teil von nutzbarer Information enthält, wobei insbesondere die vorbestimmte Anzahl etwa ein Drittel der Gesamtzahl der gespeicherten Frequenzen (f1, f2) der jeweiligen Frequenzliste (10, 20) beträgt,
- wobei nach dem Stoppen des diskreten Abtastvorgangs (500) ein kontinuierlicher Abtastvorgang (100) über ein Frequenzband (90) mit einer vorbestimmten Spanne ausgeführt wird, um die jeweilige erste oder zweite Frequenzliste (10, 20) zu aktualisieren.

10. Verfahren nach einem der Ansprüche 1 bis 9,
wobei
- der Schritt des Erstellens der ersten, der zweiten und der Hauptfrequenzliste (10, 20, 50) den Schritt des Zuordnens der jeweiligen Frequenzliste zu einem jeweiligen Zeitstempel beinhaltet,
- wobei während des diskreten Abtastvorgangs (500) über eine der Frequenzlisten (10, 20, 50) festgestellt wird, ob der jeweilige Zeitstempel abgelaufen ist, und für den Fall, dass der Zeitstempel abgelaufen ist, ein kontinuierlicher Abtastvorgang (100) über ein Frequenzband (90) mit einer vorbestimmten Spanne ausgeführt wird, um die jeweilige Frequenzliste zu aktualisieren.

11. Verfahren nach einem der Ansprüche 1 bis 10,
wobei die Hauptfrequenzliste (50) derart sortiert wird, dass Einträge, die sich auf Dienste beziehen, die nur einer jeweiligen gespeicherten Frequenz (f51, f52) zugeordnet sind, in der Hauptfrequenzliste als erstes aufgeführt werden.

12. System (1) zum Empfangen von Rundfunksignalen, mit
- einem Empfänger (3) zum Empfangen von gesendeten Signalen, mit einem Tuner (31), der zum Empfangen von gesendeten Signalen (9) bei mehreren Frequenzen eines Frequenzbands (90) betreibbar ist,
- einer mit dem Empfänger (3) gekoppelten Verarbeitungseinheit (5, 8), die zum Ausführen der folgenden Schritte ausgebildet ist:
- Steuern des Empfängers (3) zum Ausführen eines ersten Abtastvorgangs (100) über ein Frequenzband (90) mit einer vorbestimmten Spanne und zum Feststellen von jeweiligen Frequenzen (f1) des Frequenzbands, bei denen während des ersten Abtastvorgangs jeweils mindestens ein Dienst identifiziert worden ist, und zum Ausführen eines zweiten Abtastvorgangs (200) über ein Frequenzband (90) mit einer vorbestimmten Spanne und zum Feststellen von jeweiligen Frequenzen (f2) des Frequenzbands, bei denen während des zweiten Abtastvorgangs jeweils mindestens ein Dienst identifiziert worden ist,
- Speichern der festgestellten Frequenzen (f1) des ersten Abtastvorgangs (100) in einer ersten Frequenzliste (10) und der festgestellten Frequenzen (f2) des zweiten Abtastvorgangs in einer zweiten Frequenzliste (20),
- Erstellen einer Hauptfrequenzliste (50), die Frequenzen (f51, f52) speichert, die Frequenzen (f1, f2) der ersten Frequenzliste (10) und der zweiten Frequenzliste (20) entsprechen,
- nach Erstellung der Hauptfrequenzliste (50) erfolgendes Auswerten von mindestens einem von dem Empfänger (3) empfangenen Signal (9), um festzustellen, ob das empfangene Signal mindestens einen Teil von nutzbarer Information enthält, die anzeigt, dass der jeweilige Dienst dem Nutzer bereitgestellt wird,
- bei Feststellung, dass das empfangene Signal (9) nicht mindestens einen Teil von nutzbarer Information enthält oder wenn eine entsprechende Nutzeranweisung (UI) vorliegt, Steuern des Empfängers (3) zum Ausführen eines diskreten Abtastvorgangs (500) über die Hauptfrequenzliste (50), wobei dadurch mindestens eine der in der Hauptfrequenzliste (50) gespeicherten Frequenzen (f51, f52) berücksichtigt wird,
**gekennzeichnet durch**:
- bei Feststellung, dass das empfangene Signal (9) bei einer ausgewählten (f51) der gespeicherten Frequenzen (f51, f52) der Hauptfrequenzliste (50) mindestens einen Teil von nutzbarer Information enthält, und wenn die ausgewählte eine Frequenz (f51) der gespeicherten Frequenzen in der ersten Frequenzliste (10) enthalten ist, Betreiben des Empfängers (3) zum Fortsetzen des diskreten Abtastvorgangs (500) über die erste Frequenzliste (10) anstatt der Hauptfrequenzliste (50), und
- bei Feststellung, dass das empfangene Signal (9) bei einer ausgewählten (f52) der gespeicherten Frequenzen (f51, f52) der Hauptfrequenzliste (50) mindestens einen Teil von nutzbarer Information enthält und wenn die ausgewählte eine Frequenz (f52) der gespeicherten Frequenzen in der zweiten Frequenzliste (20) enthalten ist, Betreiben des Empfängers (3) zum Fortsetzen des diskreten Abtastvorgangs (500) über die zweite Frequenzliste (20) anstatt der Hauptfrequenzliste (50).

13. System nach Anspruch 12,
wobei das System (1) in einer beweglichen Vorrichtung, insbesondere in einem Fahrzeug, implementiert ist.

## Revendications

1. Procédé de réception de signaux radiodiffusés, comprenant les étapes consistant à :
- prendre un récepteur (3) pour recevoir des signaux radiodiffusés,
- exploiter le récepteur (3) pour exécuter un premier processus de balayage (100) sur une bande de fréquences (90) ayant une étendue prédéterminée et déterminer des fréquences respectives (f1) de la bande de fréquences auxquelles au moins un service a été respectivement identifié pendant le premier processus de balayage, et stocker les fréquences déterminées (f1) du premier processus de balayage dans une première liste de fréquences (10),
- exploiter le récepteur (3) pour exécuter un deuxième processus de balayage (200) sur une bande de fréquences (90) ayant une étendue prédéterminée et déterminer des fréquences respectives (f2) de la bande de fréquences auxquelles au moins un service a été respectivement identifié pendant le deuxième processus de balayage, et stocker les fréquences déterminées (f2) du deuxième processus de balayage dans une deuxième liste de fréquences (20),
- créer une liste de fréquences principale (50) qui stocke des fréquences (f51, f52) correspondant à des fréquences (f1, f2) de la première liste de fréquences (10) et de la deuxième liste de fréquences (20),
- après avoir créé la liste de fréquences principale (50), évaluer au moins un signal (9) reçu par le récepteur (3) pour déterminer si le signal reçu contient au moins une partie d'informations utilisables qui indique que le service respectif est fourni à l'utilisateur,
- s'il est déterminé que le signal reçu (9) ne contient pas au moins une partie d'informations utilisables, ou suite à une instruction utilisateur (UI) correspondante, exploiter le récepteur (3) pour exécuter un processus de balayage discret (500) sur la liste de fréquences principale (50), considérant de ce fait au moins une des fréquences (f51, f52) stockées dans la liste de fréquences principale (50), **caractérisé en ce que** :
- s'il est déterminé que le signal reçu (9) à une fréquence sélectionnée (f51) des fréquences stockées (f51, f52) de la liste de fréquences principale (50) contient au moins une partie d'informations utilisables et si la fréquence sélectionnée (f51) des fréquences stockées est incluse dans la première liste de fréquences (10), le récepteur (3) est exploité pour continuer le processus de balayage discret (500) sur la première liste de fréquences (10) au lieu de la liste de fréquences principale (50), et
- s'il est déterminé que le signal reçu (9) à une fréquence sélectionnée (f52) des fréquences stockées (f51, f52) de la liste de fréquences principale (50) contient au moins une partie d'informations utilisables et si la fréquence sélectionnée (f52) des fréquences stockées est incluse dans la deuxième liste de fréquences (20), le récepteur (3) est exploité pour continuer le processus de balayage discret (500) sur la deuxième liste de fréquences (20) au lieu de la liste de fréquences principale (50).

2. Procédé selon la revendication 1, dans lequel :
les fréquences déterminées (f1, f2) sont stockées dans les première et deuxième listes de fréquences (10, 20) en ce que, pour chacune des fréquences déterminées dans les premier et deuxième processus de balayage (100, 200), un identifiant de service associé (CNN, BBC, ...) est stocké.

3. Procédé selon l'une des revendications 1 et 2, dans lequel :
- la première liste de fréquences (10) est associée à un premier identifiant régional (A1) qui attribue la première liste de fréquences à une zone de radiodiffusion spécifique (41) dans laquelle le premier processus de balayage (100) a été exécuté,
- la deuxième liste de fréquences (20) est associée à un deuxième identifiant régional (A2) qui attribue la deuxième liste de fréquences à une zone de radiodiffusion spécifique (42) dans laquelle le deuxième processus de balayage (200) a été exécuté.

4. Procédé selon la revendication 3, dans lequel :
l'étape de création de la liste de fréquences principale (50) consiste à :
- associer des fréquences respectives, parmi les fréquences (f51) de la liste de fréquences principale (50), qui correspondent à des fréquences (f1) de la première liste de fréquences (10) au premier identifiant régional (A1),
- associer des fréquences respectives, parmi les fréquences (f52) de la liste de fréquences principale (50), qui correspondent à des fréquences (f2) de la deuxième liste de fréquences (20) au deuxième identifiant régional (A2).

5. Procédé selon la revendication 4, dans lequel :
pendant l'étape d'exploitation du récepteur (3) pour exécuter le processus de balayage discret (500) sur la liste de fréquences principale (50),
- s'il est déterminé que le signal reçu (9) à une fréquence sélectionnée des fréquences stockées (f51, f52) de la liste de fréquences principale contient au moins une partie d'informations utilisables, l'identifiant régional (A1, A2) associé à la fréquence sélectionnée des fréquences stockées (f51, f52) de la liste de fréquences principale (50) est déterminé, et
- le récepteur (3) est exploité pour continuer le processus de balayage discret (500) sur celle des première et deuxième listes de fréquences (10, 20) qui a un identifiant régional (A1, A2) correspondant à l'identifiant régional déterminé (A1, A2).

6. Procédé selon la revendication 4 ou 5,
- comprenant en outre l'étape consistant à enregistrer chaque changement d'une zone de radiodiffusion courante (41-72) à une zone de radiodiffusion subséquente (41-72), enregistrant de ce fait les identifiants régionaux respectifs (A1-A16) associés à chaque zone de radiodiffusion courante et à chaque zone de radiodiffusion subséquente dans une relation d'appariement respective (80),
- dans lequel l'étape d'exploitation du récepteur (3) pour exécuter un processus de balayage discret (500) sur la liste de fréquences principale (50) consiste à considérer seulement, dans la liste de fréquences principale (50), les fréquences ayant un identifiant régional (A6, A7, A8, A10, A12, A14, A15, A16) qui fait partie d'au moins une relation d'appariement (80) contenant l'identifiant régional (A11) de la zone de radiodiffusion la plus récente.

7. Procédé selon l'une des revendications 1 à 6, dans lequel :
- le processus de balayage discret (500) sur la première ou deuxième liste de fréquence (10, 20) est continué jusqu'à ce qu'il soit déterminé qu'un signal reçu (9) à une fréquence sélectionnée (fS) des fréquences stockées (f1, f2) contient au moins une partie d'informations utilisables,
- dans lequel le processus de balayage discret (500) est arrêté à la fréquence sélectionnée (fS) des fréquences stockées, et les fréquences restantes (fR) de la première ou deuxième liste de fréquences (10, 20), respectivement, sont prises par le récepteur à des fins de syntonisation.

8. Procédé selon l'une des revendications 1 à 7, dans lequel :
dans le processus de balayage discret (500) sur la première ou deuxième liste de fréquences (10, 20), dans le cas où il est déterminé qu'un signal reçu (9) à une fréquence (fNU) des fréquences stockées (f1, f2) de la première ou deuxième liste de fréquences respective (10, 20) ne contient pas au moins une partie d'informations utilisables, la fréquence (fNU) des fréquences stockées est supprimée de la première ou deuxième liste de fréquences respective (10, 20).

9. Procédé selon l'une des revendications 1 à 8, dans lequel :
- le processus de balayage discret (500) sur la première ou deuxième liste de fréquences (10, 20) est arrêté s'il est déterminé qu'un signal reçu respectif (9) à un nombre prédéterminé des fréquences stockées (f1, f2) ne contient pas au moins une partie d'informations utilisables, le nombre prédéterminé étant en particulier d'approximativement un tiers du nombre total de fréquences stockées (f1, f2) de la liste de fréquences respective (10, 20),
- dans lequel après l'arrêt du processus de balayage discret (500), un processus de balayage continu (100) sur une bande de fréquences (90) ayant une étendue prédéterminée est effectué pour mettre à jour la première ou deuxième liste de fréquences respective (10, 20).

10. Procédé selon l'une des revendications 1 à 9, dans lequel :
- l'étape de création de la première liste de fréquences, de la deuxième liste de fréquences et de la liste de fréquences principale (10, 20, 50) comprend l'étape consistant à associer la liste de fréquences respective à une estampille temporelle respective,
- dans lequel pendant le processus de balayage discret (500) sur l'une des listes de fréquences (10, 20, 50), il est déterminé si l'estampille temporelle respective a expiré, et dans le cas où l'estampille temporelle a expiré, un processus de balayage continu (100) sur une bande de fréquences (90) ayant une étendue prédéterminée est effectué pour mettre à jour la liste de fréquences respective.

11. Procédé selon l'une des revendications 1 à 10, dans lequel :
la liste de fréquences principale (50) est triée de manière que des éléments relatifs à des services qui sont associés à une seule fréquence stockée respective (f51, f52) soient listés en premier dans la liste de fréquences principale.

12. Système (1) de réception de signaux radiodiffusés, comprenant :
- un récepteur (3) pour recevoir des signaux radiodiffusés, comprenant un syntoniseur (31) qui est exploitable pour recevoir des signaux radiodiffusés (9) à de multiples fréquences d'une bande de fréquences (90),
- une unité de traitement (5, 8) couplée au récepteur (3) et qui est conçue pour effectuer les étapes suivantes :
- commander le récepteur (3) pour exécuter un premier processus de balayage (100) sur une bande de fréquences (90) ayant une étendue prédéterminée et pour déterminer des fréquences respectives (f1) de la bande de fréquences auxquelles au moins un service a été respectivement identifié pendant le premier processus de balayage, et pour exécuter un deuxième processus de balayage (200) sur une bande de fréquences (90) ayant une étendue prédéterminée et pour déterminer des fréquences respectives (f2) de la bande de fréquences auxquelles au moins un service a été respectivement identifié pendant le deuxième processus de balayage,
- stocker les fréquences déterminées (f1) du premier processus de balayage (100) dans une première liste de fréquences (10) et les fréquences déterminées (f2) du deuxième processus de balayage dans une deuxième liste de fréquences (20),
- créer une liste de fréquences principale (50) qui stocke des fréquences (f51, f52) correspondant à des fréquences (f1, f2) des première et deuxième listes de fréquences (10),
- après avoir créé la liste de fréquences principale (50), évaluer au moins un signal (9) reçu par le récepteur (3) pour déterminer si le signal reçu contient au moins une partie d'informations utilisables qui indique que le service respectif est fourni à l'utilisateur,
- s'il est déterminé que le signal reçu (9) ne contient pas au moins une partie d'informations utilisables, ou suite à une instruction utilisateur (UI) correspondante, commander le récepteur (3) pour exécuter un processus de balayage discret (500) sur la liste de fréquences principale (50), considérant de ce fait au moins une des fréquences (f51, f52) stockées dans la liste de fréquences principale (50), **caractérisé en ce que** :
- s'il est déterminé que le signal reçu (9) à une fréquence sélectionnée (f51) des fréquences stockées (f51, f52) de la liste de fréquences principale (50) contient au moins une partie d'informations utilisables et si la fréquence sélectionnée (f51) des fréquences stockées est incluse dans la première liste de fréquences (10), le récepteur (3) est exploité pour continuer le processus de balayage discret (500) sur la première liste de fréquences (10) au lieu de la liste de fréquences principale (50), et
- s'il est déterminé que le signal reçu (9) à une fréquence sélectionnée (f52) des fréquences stockées (f51, f52) de la liste de fréquences principale (50) contient au moins une partie d'informations utilisables et si la fréquence sélectionnée (f52) des fréquences stockées est incluse dans la deuxième liste de fréquences (20), le récepteur (3) est exploité pour continuer le processus de balayage discret (500) sur la deuxième liste de fréquences (20) au lieu de la liste de fréquences principale (50).

13. Système selon la revendication 12, dans lequel :
le système (1) est mis en oeuvre dans un dispositif mobile, en particulier dans un véhicule.
